Europäisches Patentamt

European Patent Office

Office européen des brevets

(11) Publication number: **0 087 141**
**B1**

(12) EUROPEAN PATENT SPECIFICATION

(45) Date of publication of patent specification: **04.06.86**

(51) Int. Cl.⁴: **G 07 F 13/10**

(21) Application number: **83101572.2**

(22) Date of filing: **18.02.83**

(54) A drinking cup feeding device for an automatic vending machine.

(30) Priority: **18.02.82 JP 24931/82**

(43) Date of publication of application:
**31.08.83 Bulletin 83/35**

(45) Publication of the grant of the patent:
**04.06.86 Bulletin 86/23**

(84) Designated Contracting States:
**DE GB NL**

(56) References cited:
**DE-A-2 410 053**
**GB-A- 861 173**
**GB-A-1 325 202**
**GB-A-1 588 233**
**GB-A-1 604 306**
**US-A-2 869 754**
**US-A-3 578 126**
**US-A-3 648 889**
**US-A-3 819 086**

(73) Proprietor: **FUJI ELECTRIC CO., LTD.**
**1-1, Tanabeshinden, Kawasaki-ku**
**Kawasaki-shi Kanagawa 210 (JP)**

(72) Inventor: **Takagi, Toshio**
**7-1621-1, Yasunaga Kawana-shi**
**Mie-ken (JP)**
Inventor: **Iwanami, Masao**
**663-151, Nomachi Suzuka-shi**
**Mie-ken (JP)**
Inventor: **Sumikawa, Teruaki**
**5167-10, Hazukou Yokkaichi-shi**
**Mie-ken (JP)**

(74) Representative: **Blumbach Weser Bergen**
**Kramer Zwirner Hoffmann Patentanwälte**
**Radeckestrasse 43**
**D-8000 München 60 (DE)**

Courier Press, Leamington Spa, England.

## Description

This invention relates to a drinking cup feeding device for an automatic vending machine, more particularly, to such a device for storing therein plural kinds of drinking cups, such as a large-volume cup for use exclusively for cold drink and a small-volume cup for use exclusively for hot drink, to pick out the appropriate kind of cup according to the product selected and feed it toward a vending stage, as in the case of a cup-type automatic vending machine which is operable to vend a cold drink such as syrup as well as a hot drink made from hot drink-making powder as the major material, such as coffee and cocoa.

Recently, such a machine has appeared, that can vend both cold drinks and hot drinks from the same machine, by combining into one unit a conventional vending machine exclusively vending cold drink made of syrup and a conventional vending machine exclusively vending hot drink made from powder, in order to facilitate supplying a wide range of beverages and achieve a saving in space, in comparison with the area occupied by two separate vending machines. In such a case, since the final quantity of cold drink in a cup differs from the quantity of hot drink in a cup, it is necessary to provide two kinds of drinking cups having different volumes and to pick out the appropriate size of cup, to feed it to the vending stage, according to the drink selected.

To that end, such a conventional automatic vending machine has been equipped with two independent cup feeding devices therein for supplying cups for cold drink and cups for hot drink respectively. However, the relative proportions of the amounts of hot drink and cold drink sold vary substantially, depending on the season, in that there is a great demand for cold drinks in the summer season, and on the contrary there is a great demand for hot drinks in the winter season. In this respect, it has been necessary for the cup feeding devices of a conventional machine to have such a cup storage capacity as to incorporate a quantity of cups for cold and hot drinks to satisfy both the summer demand and the winter demand. However, the turnover rate of cups for hot drink in the summer season or cups for cold drink in the winter season is very small, due to the above-mentioned seasonal variation in demand. Consequently, the above-mentioned conventional vending machine with two cup feeding devices suffers from the disadvantage that the cup feeding devices cannot both be utilized efficiently at the same time, insofar as one cup feeding device has a very poor working ratio, by virtue of being required to meet a low demand for cups, although it occupies a large space in the machine, while the other device is used heavily and this requires frequent cup-replenishing operations. Further, if the cup storage capacity of each cup feeding device is enlarged, the space in the machine occupied by the device becomes much larger, causing enlargement of the cabinet of the machine, which results in restrictions in installation of the vending machine, due to the space required thereby.

In view of the above-mentioned circumstances, an object of this invention is to provide a drinking cup feeding device for an automatic vending machine, which is of a compact size and which requires less frequent cup replenishing operations, and in which plural kinds of drinking cups are stored in one cup feeding device, in which an exclusive-use drinking cup can be delivered from a separately provided cup removal opening according to the drink selected for vending, in which the device can be set by a simple operation to a desired cup storage ratio in respect of each kind of cup, relative to the overall cup storage capacity of the device, and in which plural kinds of drinking cups can be supplied with only one device.

The above-mentioned object is accomplished in accordance with this invention, with a drinking cup feeding device as claimed in claim 1.

The invention will be better understood from the following description of an embodiment given by way of example, with reference to the accompanying drawings in which

Fig. 1 is a plan view of the entire device,

Fig. 2 is a sectional view taken substantially on line II—II in Fig. 1,

Figs. 3 and 4 are an enlarged plan view of the selecting mechanism portion of the device and a side view of a part thereof,

Figs. 5 and 6 are a plan view and a side view of the cup delivering mechanism portion of the device,

Figs. 7(a) and (b) and Figs 8(a) and (b) are a plan view and a side view showing different operating positions of the clutch mechanism in Fig. 6 and

Figs. 9(a) and (b) respectively illustrate opened and closed positions of the gate mechanism of the device.

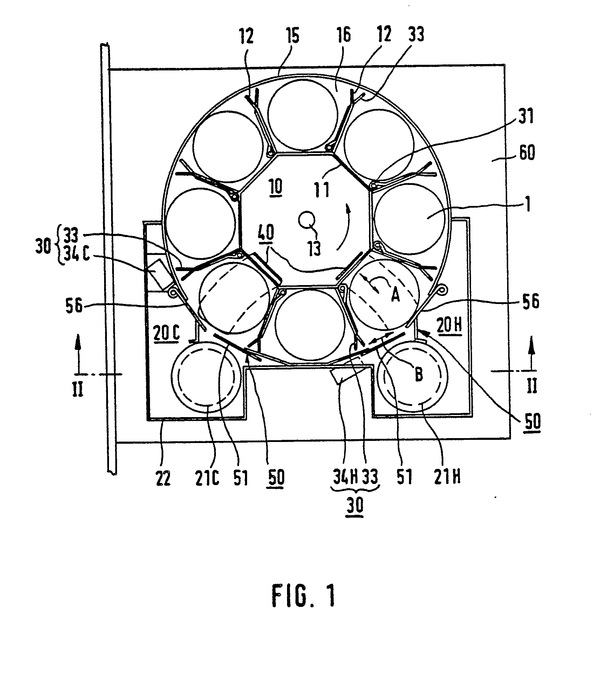

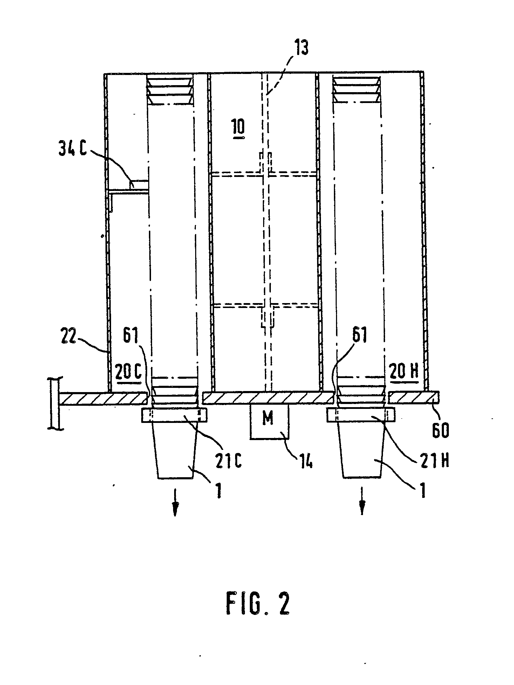

With reference now to the drawings and more particularly to Fig. 1 and Fig. 2, a cup feeding device generally comprises the combination of a cup storage drum 10 of driven vertical-axis rotary type, two cup removal units or stages 20C and 20H (the suffix C is the abbreviation for Cold and H is the abbreviation for Hot) for the cold drink cups and the hot drink cups, equipped with cup removal mechanisms, classified-by-kind cup selecting mechanisms 30, cup delivering mechanisms 40 corresponding to each cup removal stage 20C and 20H, and gate mechanisms 50 arranged at the junction between the cup storage drum 10 and the cup removal stages 20C, 20H. The drum 10 comprises a drum body including a polygonal inner cylinder 11 and partition plates 12 extending radially from each vertex of the polygonal configuration of the inner cylinder, a rotating shaft 13 secured to the body, a drum driving motor 14 (Fig. 2) coupled to the rotating shaft 13, and a fixed outer cover 15 defining an enveloping outer peripheral surface for the drum body; all of these components are installed on a base plate 60. Stored in cup storage chambers 16 which are defined by the partition plates 12 and which are disposed on a peripheral circle are groups of cups, each of which is composed of the same kind of drinking cup 1 stacked in a column. Adjacent, the outward periphery of the drum 10, and deviating from the locus of rotation of the drum 10, are the two cup removal stages 20C and 20H for the cold and hot drink cups, disposed to the right and the left of the base plate 60. The cup removal stages 20C, 20H include cup removal holes 61 provided in the base plate 60, with the cup removal mechanisms 21C, 21H associated with the cup removal holes; an external wall 22 which surrounds the cup removal holes is supported on the base plate 60. The cup removal mechanisms 21C, 21H are means which pull down and deliver the bottom cup one by one from the groups of cups disposed in vertical columns thereon, by means of a motor operated on the basis of selling instruction, and include adjusting mechanisms to adjust to the varying cup sizes and sold-out detection switches to detect when the cups are sold out.

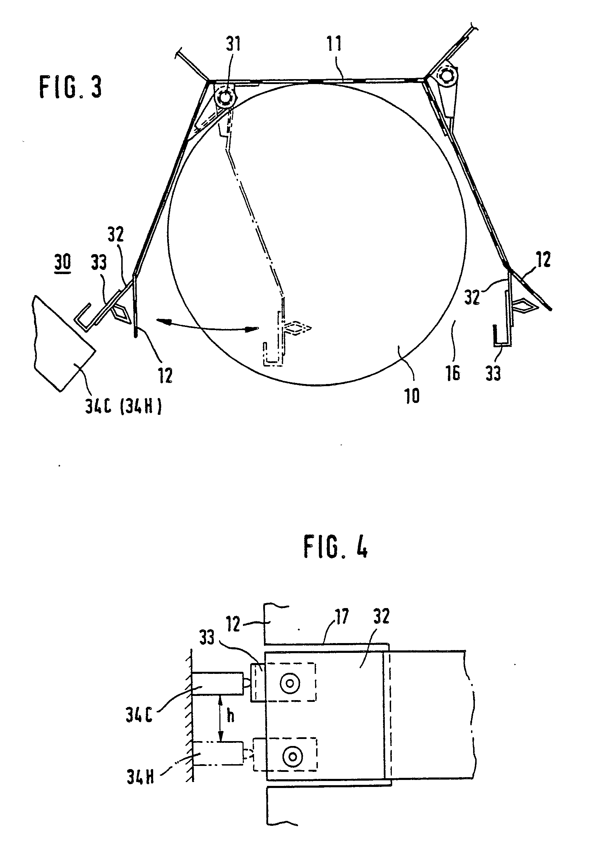

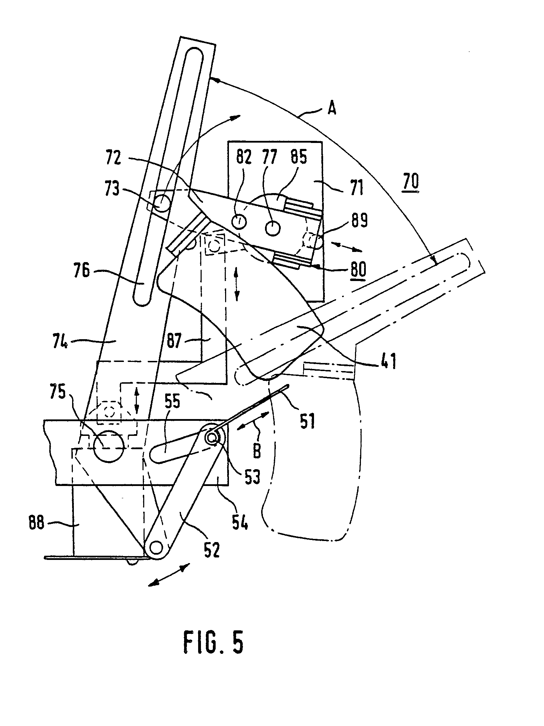

The cup selecting mechanism 30, the constructional details of which are as shown in Fig. 3 and Fig. 4, comprises a respective swing type detecting lever 32 supported by a supporting pin 31 to a rear wall of each cup storage chamber 16 of the cup storage drum side, an actuator 33 mounted to the tip end of the detecting lever in such a way that its mounted height can be adjusted, and cup detecting switches 34C, 34H mounted at the positions of the fixed sides, corresponding to those of the cup removal stages 20C, 20H in Fig. 1, with their mounted heights differing from each other by the distance h as shown in Fig. 4. The detecting lever 32 is spring-loaded toward the cup 1 in the storage chamber 16, and thus moves to the broken-line position of Fig. 3 if the cup storage chamber 16 is empty while, when there is a cup 1 in the chamber 16, the lever 32 is held in the solid-line position in Fig. 3. The operating height of the actuator 33 is selectively adjusted to adapt it to either of the cup detecting switches 34C or 34H, according to the kind of cup stored in each cup storage chamber 16. In order to avoid interference of the swing lever 32 with the partition plate 12 of the cup storage drum, a notch or opening 17 is formed in the partition plate 12 as shown in Fig. 4. Therefore, if the groups of cups are stored in the cup storage chamber 16 during a process of slow-speed rotation of the cup storage drum 10, the actuator 33 will actuate the cup detecting switch 34C or 34H at the time when the cup storage chamber reaches a position confronting the respective one of the cup removal stages 20C, 20H corresponding thereto.

Reference will now be made to Fig. 5 to Fig. 8 to describe the detailed constructions of the cup delivering mechanism 40 and the gate mechanism 50 shown in Fig. 1. The cup delivering mechanism 40 is designed to push the cups in a given cup storage chamber, on the basis of a vending instruction, towards the cup removal stage, provided that the cup storage drum 10 has stopped at the appropriate place, and is further designed to operate, with a reciprocating motion, an L-shaped pusher 41, by means of a driving arrangement 70, to deliver the group of cups from behind towards the cup removal stage, sliding them on the base plate 60 while still in a vertical upright condition. The driving arrangement 70 comprises a drive motor 71, a driving arm 72 driven by the motor 71, and a swing lever 74 supporting the pusher 41 and engaged with a pin 73 at the tip of the arm 72, the swing lever 74 being supported pivotally about a fulcrum pin 75, and the pin 73 engaging in a slot 76 in the lever 74. When the motor 71 drives the driving arm 72 in this state, the swing lever 74 reciprocates pivotally between the solid-line and the broken-line positions, as shown by the arrow A in Fig. 5 during one revolution of the driving arm 72, and the pusher 41 pushes the group of cups in the cup storage chamber from behind towards the cup removal stage, during the above-indicated motion.

A side gate door 51 forming part of the above-mentioned gate mechanism 50 is interconnected to the swing lever 74 through a link 52, and a supporting shaft 53 of the gate door 51 fits into and is guided by a slot 55 in a bed frame 54. Consequently, the gate door 51 functions to open and close in the direction of the arrow B, accompanying the swing motion of the swing lever 74. The gate door 51 is normally disposed in a closure position to project in between the cup storage drum and the cup removal stage in order to prevent the column of cups from falling down, and operates temporarily to open by being interlocked with the pusher 41 only when the group of cups in the drum is delivered to the cup removal stage. Naturally, the motor 71 may be directly coupled to the driving arm 72 in the above-mentioned driving arrangement 70. In the specific embodiment shown in the figures, a clutch mechanism, as described below, is interposed between the motor 71 and the driving arm 72 to permit engagement and disengagement of the two as required. By thus interposing the clutch mechanism between them, it is possible to use the one driving motor 71 as a motive power source for both the cup delivering mechanism and the cup removal mechanism.

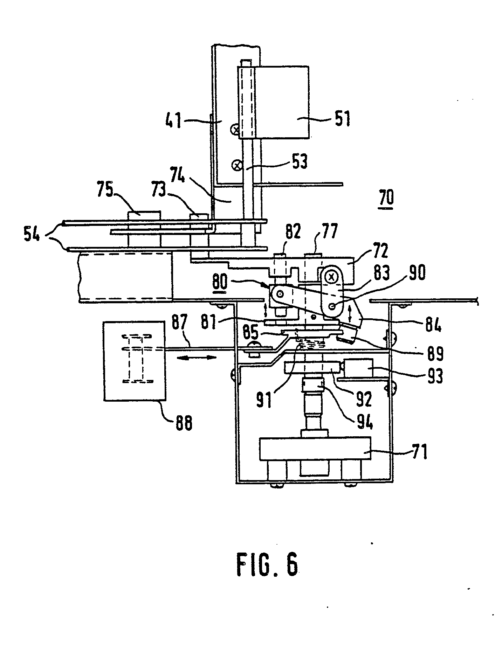

Reference will now be made to Fig. 6, Fig. 7 and Fig. 8 for the detailed constructions of the clutch mechanism. The driving arm 72 is movably fitted to a driving motor shaft 77. A clutch mechanism 80 comprises a vertically movable slide shaft 82 which functions to couple the driving arm 72 to a rotary plate 81 securely fixed to the motor shaft 77 parallel to the driving arm 72, by being fitted into through shaft holes provided in both the driving arm 72 and the rotary plate 81 at the same radius thereof, a control lever 84 connected to the slide shaft 82 and supported by the driving arm 72 through a supporting lever 83, a disc cam 85 movably fitted to the motor shaft 77 for pivotally operating said lever 84, and an electromagnetic solenoid 88 connected to an arm 86 of the cam 85 through a link 87. A roller 89 is carried by the control lever 84 facing the cam 85, and the control lever 84 is pivotally connected to the supporting lever 83 by means of a pin 90. With reference to Fig. 6, reference 91 denotes a return spring of the cam 85, 92 is a cam secured to the motor shaft 77 opposite a switch 93 for detecting the rotational position of the motor shaft 77, and 94 is a driving lever interconnected to the cup removal mechanism shown in Fig. 2.

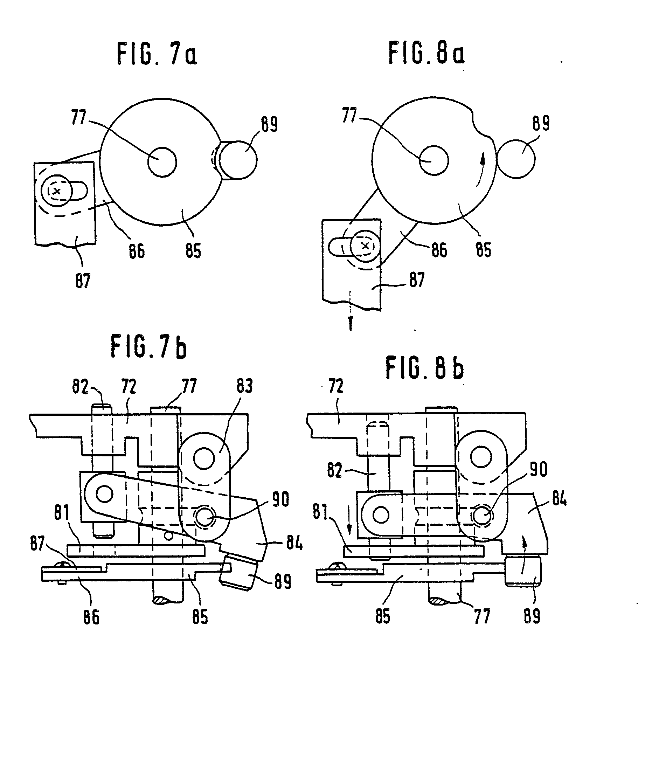

The above-described clutch mechanism 80 functions as described below: In a normal waiting condition, as shown in Figs. 7(a) and (b), the roller 89 drops into a depression formed at a position on the periphery of the cam 85, the control lever 84 assumes such a position as to swing clockwise about the pin 90, and the slide shaft 82 is lifted upwards away from the shaft hole in the rotary plate 81. Consequently, the motor shaft 77 is disconnected from the driving arm 72 and rotation of the motor 71 is not transmitted to the driving arm 72. On the contrary, when the solenoid 88 receives an operating signal to cause withdrawal movement as shown in Fig. 8(a) and (b), the cam 85 rotates slightly in the direction of the arrow in Fig. 8(a), through the link 87, to push the roller 89 out of the depression of the cam 85. Therefore, the swing lever 84 swings counterclockwise (in Fig. 7(b)) about the pin 90 to pull down the slide shaft 82. If the motor 71 starts with the arrangement in this condition, the slide shaft 82 fits into the shaft hole in the rotary plate 81 at the time when the shaft hole in the rotary plate 81 coincides with the slide shaft 82, and the clutch is brought into the engaged condition. Thus, the rotation of the motor 71 is transmitted through the rotary plate 81 and the slide shaft 82 to the driving arm 72, and the swing lever 74 is swingingly operated to actuate the pusher 41 and the gate door 51 as described with reference to Fig. 5. The above-mentioned clutch mechanism 80 and the driving mechanism of the pusher 41 and the gate door 51 represent one construction given by way of example in this invention, and other mechanisms may be adopted, without being restricted thereto.

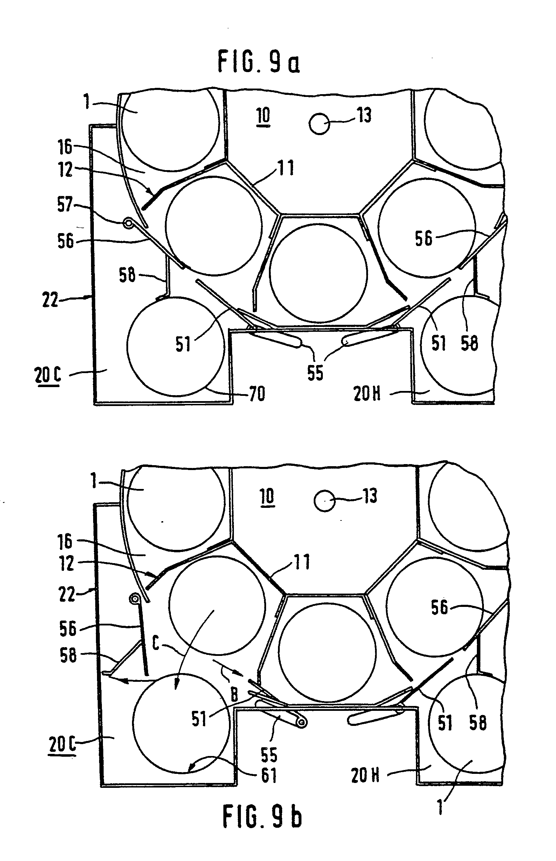

With reference now again to Fig. 1, the gate mechanism 50 comprises the combination of the gate door 51 and a gate door 56 of a flap-like construction, forming a pair with the gate door 51. The arrangement and the opening and closing function of the gate doors 51 and 56 will be described hereunder with reference to Figs. 9(a) and (b). Both the gate doors 51 and 56 are arranged at the junction between the cup storage drum 10 and the cup removal stages 20C, 20H in line. More particularly, the gate door 51 is opened and closed by a motor drive by being interlocked with the cup delivering mechanism as described above. The other gate door 56 is pivotally supported about the pin 57 and is normally urged towards the closed position by means of a spring (not shown in the drawings). Further, the gate door 56 has a cup holding arm 58 branching away from a middle portion thereof, the functions of the gate door 56 and the cup holding arm 58 are as follows: In the state where there is a cup 1 in the cup removal stage, as shown in Fig. 9(a), the gate doors 51, 56 are closed to prevent the column of cups from accidentally falling out. On the other hand, when the cup removal stage 20C becomes empty and the column of cups is pushed forth as shown by the arrow C (Fig. 9(b)) from the cup storage drum 10 towards the cup removal stage 20C by means of the cup delivering mechanism (not shown), as illustrated in Fig. 9(b), the gate door 51 moves back to open a supplementary passage for the cup and at the same time the other gate door 56 begins to open by being pushed aside by the cups. The moment the group of cups slips past the gate door 56, the gate door 56 is closed by the spring force and the same time the cup holding arm 58 moves to a position behind the group of cups. Accordingly, there is no possibility of the group of cups moving back towards the cup storage drum together with the pusher 41 during the return movement of the pusher of the cup delivering mechanism, and the group of cups is correctly positioned in the cup removal stage, and set to the cup removal mechanism.

The construction and function of each part of the device having been described above, the cup feeding function as a whole cup feeding device will now be described: First of all, the proportion of the number of cups for cold drinks to that for hot drinks is previously and properly determined, having regard to the entire capacity of the cup storage drum 10, based on the ratio of demands for cold drinks and hot drinks, estimated from conditions such as seasonal fluctuations etc., and that determined proportion is assigned to the plural cup storage chambers 16. With respect to chambers storing the cold drink cups, the actuator 33 of the cup selecting mechanism 30 is set by adjusting its height to that of the cold drink cup detecting switch 34C. With respect to chambers storing the hot drink cups, the actuator 33 of the cup selecting mechanism is set by adjusting its height to that of the hot drink cup selecting switch 34H. Thereupon, cups 1 corresponding to each kind are stacked in the respective chamber and stored therein, preparation of the device thus being completed.

Sequence control is executed in such a way that, when the stock of cups in the cup feed mechanism becomes short, the cup sold-out switch functions to send a signal to the drum drive motor 14 and causes rotation of the cup storage drum 10 independently for respective cup removal mechanisms 21C, 21H for cold drinks and hot drinks. When the cup detecting switch 34C, 34H is actuated by the actuator 33 of the cup selecting mechanism, by the rotary movement of the drum 10, that actuation combined (anded) with actuation of the sold-out switch of said cup mechanism, gives the drum drive motor 14 a stop signal. The control circuit is further so designed that at the same time a signal is also given to the solenoid 88 of the cup delivering mechanism to actuate the solenoid 88, and the drive motor 71 will start upon the next selling instruction. The following functions are the same as those of a conventional cup feed mechanism: Upon a selling instruction, either of the cup removal mechanisms operates according to the selection of a cold drink or a hot drink; and cups are delivered one by one from the cup removal stage to the vending stage.

With the above-mentioned construction, the feeding device operates as follows: The cup storage drum 10 rotates when either of the cup removal stages 20C, 20H attains the sold-out condition as selling proceeds; the drum stops at the moment when a cup storage chamber 16, which stores a group of cups of a kind corresponding to that of an emptied cup removal stage, just reaches the position facing the cup removal stage; the cup delivering mechanism 40 starts operating together with operation of the cup removal mechanism upon the next selling instruction; and a column of cups having been stored in a cup storage chamber, is delivered to the emptied cup removal stage en bloc. Further, when the group of cups newly delivered to the cup removal stage is correctly set to the cup removal mechanism and the cup delivering mechanism and gate mechanism return to their original positions, the cup replenishing operation is completed and the device returns to its waiting condition. The empty cup storage chamber 16 passes through the stage without actuating the cup detecting switch during the rotary movement of the cup storage drum 10 since the detecting lever 32 associated with that chamber 16 has moved back to the broken-line position in Fig. 3.

As seen from the above description, according to this invention, plural kinds of drinking cups can be stored and disposed of by utilizing one drinking cup feeding device, and the amount of space in an automatic vending machine occupied by the cup feeding device can be minimized, to ensure compactness thereof. With regard to the plural cup storage chambers 16 in the cup storage drum 10, the proportion of chambers for storing classified-by-kind cups can be changed at will in response to the fluctuation in demand for drinks according to selling conditions such as seasonal factors etc., because the groups of cups, stored in the drum 10 can be selected in each chamber by suitably setting the position of the actuator for the cup selecting mechanism and, moreover, setting of the groups of stored cups, according to the kinds of cup, can be done at random. For this reason, a limited cup storage capacity can be utilized, to maximum efficiency, and the frequency of cup replenishment can be minimized, as well as providing an improvement in regard to maintenance. Furthermore, according to this invention, it is possible to provide a drinking cup feeding device which is of high practical value and which is superior in construction and function, which can select plural kinds of stored cups and feed them to the cup removal mechanism of the cup removal stage smoothly by arranging the cup removal stages adjacent the cup storage drum outside the locus of drum rotation and by further providing the cup selecting mechanism and the cup delivering mechanism.

**Claims**

1. A drinking cup feeding device for an automatic vending machine, comprising a cup storage drum (10) which can be driven in rotation about a vertical axis and which is provided at its periphery with a plurality of cup storage chambers (16) for receiving respective groups of drinking cups vertically stacked in columns, characterised in that it comprises a cup removal stage (20C, 20H) equipped with plural classified-by-kind cup removal mechanisms (21C, 21H) positioned at an outer peripheral location, differing from the locus of rotational movement of the cup storage drum (10) and spaced apart from each other, a cup selecting mechanism (30) which detects when a group of cups in a respective cup storage chamber (16) reaches the position of the cup removal stage (20C, 20H) corresponding thereto during rotation of the cup storage drum (10), and a cup delivering mechanism (40) for delivering the group of stored cups from the cup storage drum (10) to the cup removal stage (20C, 20H) while keeping the group in its upright stacked condition, to supply a group of classified-by-kind cups to the cup removal mechanism corresponding thereto for replenishment thereof, and supplying cups one by one from there to a vending stage according to the drink selected.

2. A device as set forth in claim 1, characterised by cup detecting switches (34C, 34H) at different heights at locations where the cup selecting mechanisms (30) associated with the cup storage drum (10) correspond to each cup removal stage (20C, 20H) and actuators (33) operatively associated with said cup detecting switches (34C, 34H), which are arranged in each cup storage chamber (16) at the cup storage drum side, the mounting heights of which actuators are adjustable according to the kind of cups stored in the respective storage chamber.

3. A device as set forth in claim 2, characterised in that an actuator (33) is mounted at the tip end of a swing type detecting lever (32) which is also operative to detect the presence of a stored cup by being spring-loaded toward the stored cups of the group about a supporting point.

4. A device as set forth in any of claims 1—3, characterised in that a cup delivering mechanism (40) includes a motor driven pusher (41) which is usually in a waiting condition inwardly of the periphery of the cup storage drum (10) and pushes a group of cups from the cup storage chamber (16) from behind towards the cup removal stage (20C, 20H) on the basis of an instruction.

5. A device as set forth in any of claims 1—4, characterised in that a gate mechanism (50) to prevent groups of cups from falling down is disposed at the junction between the cup storage drum (10) and the cup removal stage (20C, 20H), said gate mechanism (50) being normally in a closure position and being temporarily opened when the group of cups is delivered to the cup removal stage (20C, 20H).

## Revendications

1. Dispositif de transport de gobelets pour un distributeur automatique, comprenant un tambour de stockage de gobelets (10) qui peut être entraîné en rotation autour d'un axe vertical et qui comporte à sa périphérie un ensemble de chambres de stockage de gobelets (16) destinées à recevoir des groupes respectifs de gobelets empilés verticalement en colonnes, caractérisé en ce qu'il comprend un étage d'enlèvement de gobelets (20C, 20H) équipé de plusieurs mécanismes d'enlèvement de gobelets classés par sortes (21C, 21H) qui sont placés à un emplacement périphérique extérieur, qui diffère de la trajectoire du mouvement de rotation du tambour de stockage de gobelets (10), et mutuellement espacés, un mécanisme de sélection de gobelets (30) qui détecte le moment auquel un groupe de gobelets dans une chambre de stockage de gobelets respective (16) atteint la position de l'étage d'enlèvement de gobelets (20C, 20H) correspondant à ce groupe, pendant la rotation du tambour de stockage de gobelets (10), et un mécanisme de délivrance de gobelets (40) destiné à délivrer à l'étage d'enlèvement de gobelets (20C, 20H) le groupe de gobelets stockés provenant du tambour de stockage de gobelets (10), tout en maintenant le groupe dans son état empilé vertical, pour fournir un groupe de gobelets classés par sortes au mécanisme d'enlèvement de gobelets correspondant, pour recharger celui-ci et pour que le mécanisme d'enlèvement de gobelets fournisse des gobelets, un par un, à un étage distributeur, conformément à la boisson sélectionnée.

2. Un dispositif selon la revendication 1, caractérisé par des interrupteurs de détection de gobelets (34C, 34H) placés à différentes hauteurs à des emplacements auxquels les mécanismes de sélection de gobelets (30) associés au tambour de stockage de gobelets (10) correspondent à chaque étage d'enlèvement de gobelets (20C, 20H), et des actionneurs (33) associés fonctionnelement aux interrupteurs de détection de gobelets (34C, 34H), qui sont disposés dans chaque chambre de stockage de gobelets (16), du côté du tambour de stockage de gobelets, les hauteurs de montage de ces actionneurs étant réglables en fonction de la sorte des gobelets qui sont stockés dans la chambre de stockage respective.

3. Un dispositif selon la revendication 2, caractérisé en ce qu'un actionneur (33) est monté à l'extrémité libre d'un levier de détection du type à bascule (32) qui détecte également la présence d'un gobelet stocké, par le fait qu'il est sollicité par un ressort en direction des gobelets stockés du groupe, en pivotant par rapport à un point de support.

4. Un dispositif selon l'une quelconque des revendications 1—3, caractérisé en ce qu'un mécanisme de délivrance de gobelets (40) comprend un poussoir actionné par un moteur (41) qui est habituellement dans un état d'attente en position intérieure par rapport à la périphérie du tambour de stockage de gobelets (10), et qui pousse un groupe de gobelets hors de la chambre de stockage de gobelets (16), par l'arrière, vers l'étage d'enlèvement de gobelets (20C, 20H), sur la base d'une instruction.

5. Un dispositif selon l'une quelconque des revendications 1—4, caractérisé en ce qu'un mécanisme de portillon (50) destiné à empêcher la chute de groupes de gobelets est disposé à la jonction entre le tambour de stockage de gobelets (10) et l'étage d'enlèvement de gobelets (20C, 20H), et ce mécanisme de portillon (50) est normalement dans une position de fermeture et il est ouvert temporairement lorsque le groupe de gobelets est délivré à l'étage d'enlèvement des gobelets (20C, 20H).

## Patentansprüche

1. Speisevorrichtung für Trinkbecher in einem Verkaufsautomaten, umfassend eine Becherspeichertrommel (10), die um eine vertikale Achse in Drehung versetzt werden kann und an ihrem Umfang eine Vielzahl von Becherspeicherkammern (16) zur Aufnahme jeweiliger Gruppen von vertikal zu Säulen gestapelten Trinkbechern besitzt, dadurch gekennzeichnet, daß sie umfaßt: einen Becherentnahmeabschnitt (20C, 20H), der mit mehreren Becherentnahmemechanismen (21C, 21H) für Becher unterschiedlicher Art ausgestattet ist, welche an einer äußeren Umfangsstelle angeordnet sind, die sich von der Ortskurve der drehenden Becherspeichertrommel (10) unterscheidet, und die voneinander beabstandet sind, einen Becherwählmechanismus (30), der feststellt, wenn eine Gruppe von Bechern in einer jeweiligen Becherspeicherkammer (16) die Position des Becherentnahmeabschnitts (20C, 20H), die ihr entspricht, während der Drehung der Becherspeichertommel (10) erreicht, und einen Becherausgabemechanismus (40) zur Ausgabe der Gruppe gespeicherter Becher von der Becherspeichertrommel (10) zum Becherentnahmeabschnitt (20C, 20H), wobei die Gruppe in ihrem aufrechten Stapelzustand gehalten wird, damit eine Gruppe durch ihre Art gekennzeichneter Becher an den zugehörigen Becherentnahmemechanismus zum Zweck des Auffüllens geliefert wird und die Becher je nach ausgewähltem Getränk Stück für Stück von dort zu einem Verkaufsabschnitt geliefert werden.

2. Vorrichtung nach Anspruch 1, gekennzeichnet durch Bechererfassungsschalter (34C, 34H) in unterschiedlichen Höhen an Stellen, wo die Becherwählmechanismen (30), die der Becherspeichertrommel (10) zugeordnet sind, jedem Becherentnahmeabschnitt (20C, 20H) entsprechen, und Betätigungsglieder (33), die den Bechererfassungsschaltern (34C, 34H) betriebs-

mäßig zugeordnet sind und auf Seiten der Becherspeichertrommel in jeder Becherspeicherkammer (16) angeordnet sind, wobei die Montagehöhen der Betätigungsglieder entsprechend der Art von in der jeweiligen Speicherkammer gespeicherten Bechern einstellbar sind.

3. Vorrichtung nach Anspruch 2, dadurch gekennzeichnet, daß ein Betätigungsglied (33) an der Endspitze eines Erfassungsschwinghebels (32) montiert ist, der auch das Vorhandensein eines gespeicherten Bechers dadurch entdeckt, daß er in Richtung auf die gespeicherten Becher der Gruppe um einen Lagerpunkt federbelastet ist.

4. Vorrichtung nach einem der Ansprüche 1 bis 3, dadurch gekennzeichnet, daß ein Becherausgabemechanismus (40) ein motorgetriebenes Stoßglied (41) umfaßt, das sich normalerweise in einem Wartezustand innerhalb des Umfangs der Becherspeichertrommel (10) befindet und aufgrund eines Befehls eine Gruppe von Bechern aus der Becherspeicherkammer (16) von hinten in Richtung auf den Becherentnahmeabschnitt (20C, 20H) stößt.

5. Vorrichtung nach einem der Ansprüche 1 bis 4, dadurch gekennzeichnet, daß am Übergang zwischen der Becherspeichertrommel (10) und dem Becherentnahmeabschnitt (20C, 20H) ein Gattermechanismus (50) angeordnet ist, um zu verhindern, daß Gruppen von Bechern nach unten fallen, wobei der Gattermechanismus (50) normalerweise in einer Schließstellung ist und vorübergehend geöffnet wird, wenn die Gruppe von Bechern zum Becherentnahmeabschnitt (20C, 20H) ausgeliefert wird.

FIG. 1

FIG. 2

2

FIG. 3

FIG. 4

0 087 141

FIG. 5

4

FIG. 6

## FIG. 7a

## FIG. 8a

## FIG. 7b

## FIG. 8b

## FIG. 9 a

## FIG. 9 b